# EUROPEAN PATENT SPECIFICATION

(11) **EP 4 202 890 B1**
(45) Date of publication and mention of the grant of the patent: **23.04.2025**
(21) Application number: 22862375.7
(22) Date of filing: 14.09.2022
(51) Int. Cl.: G06F 1/16, G09F 9/30, H04M 1/02

(54) **SUPPORT ASSEMBLY AND TERMINAL DEVICE**
TRÄGERANORDNUNG UND ENDGERÄTEVORRICHTUNG
ENSEMBLE SUPPORT ET DISPOSITIF TERMINAL

(30) Priority: 10.11.2021 CN 202111327426
(43) Date of publication of application: 28.06.2023
(73) Proprietor: Honor Device Co., Ltd., Shenzhen, Guangdong 518040 (CN)
(72) Inventor: LU, Yilin, Shenzhen, Guangdong 518040 (CN); ZHANG, Yaolei, Shenzhen, Guangdong 518040 (CN); LI, Haifei, Shenzhen, Guangdong 518040 (CN)
(74) Representative: Gill Jennings & Every LLP
(86) International application number: PCT/CN2022/118834
(87) International publication number: WO 2023/082827

(56) References cited:
- WO-A1-2021/129882
- CN-A- 110 336 903
- CN-A- 112 164 318
- CN-A- 115 019 638
- CN-U- 210 073 179
- JP-B1- 6 898 485

## Description

This application claims priority to Chinese Patent Application No. 202111327426.4, filed with the China National Intellectual Property Administration on November 10, 2021 and entitled "SUPPORT ASSEMBLY AND TERMINAL DEVICE".

### TECHNICAL FIELD

This application relates to the field of terminal technologies, and in particular, to a support assembly and a terminal device.

### BACKGROUND

With continuous development of mobile phones, foldable mobile phones gradually appear in people's lives. Screens of a foldable mobile phone may be unfolded and folded. When the foldable mobile phones are unfolded, larger screens are displayed; and when the foldable mobile phones are folded, they can be more easily carried. Typically, a foldable mobile phone includes a folding assembly, a support sheet, and a flexible display, where the support sheet is located between the folding assembly and the flexible display, to provide support for the flexible display. Folding and unfolding functions of the foldable mobile phone can be implemented by folding and unfolding the flexible display driven by folding and unfolding movements of the folding assembly.

However, abnormal noise is often generated during folding and unfolding of the foldable mobile phone. WO 2021/129882 A1 discloses foldable electronic products, and in particular an electronic device.

### SUMMARY

To resolve the foregoing technical problem, this application provides a support assembly and a terminal device, so as to reduce abnormal noise generated by the foldable terminal device in folding and unfolding processes. The invention is defined in the appended claims.

This application provides a support assembly, including: a support member, where the support member has a first side surface and a second side surface that are opposite to each other, and a first end face connected between the first side surface and the second side surface, the first side surface has at least a first bendable area, the first bendable area is connected to the first end face, and a groove is disposed on the first end face; and a bonding structure, where at least a part of the bonding structure is located on the first side surface and the second side surface.

In this way, when the support assembly is applied to the terminal device, in a process in which the support assembly bends along with bending of the flexible display, the groove may separate the first end face into a plurality of parts, and a size of each part is less than a size of the first end face. Therefore, in a process in which the foldable mobile phone folds or unfolds, each part may deform more easily, to reduce stress difference between a wave peak and a wave valley of the support member, thereby reducing the abnormal noise generated in the bending process of the support member.

In some implementations, the support assembly further includes a second end face opposite to the first end face, where the second end face is a fastened end face, and the first end face is a free end face. In this way, the second end face is an end face close to a center of the flexible display, and the groove disposed on the free end face can better absorb stress on the support member, to reduce a stress difference between the wave peak and the wave valley of the support member, thereby reducing the abnormal noise generated due to the stress difference.

A ratio of a size of the groove in a first direction to a size of the first bendable area in the first direction is in the range of 0.35-0.65, and the first direction is a depth direction of the groove. The depth direction of the groove is a direction from the first end face to the second end face. In this way, a stress peak value of the support member in the bending process can be reduced, and the stress difference between the wave peak and the wave valley of the support member in the bending process can be reduced, thereby reducing the abnormal noise generated due to the stress difference.

In some implementations, the ratio of the size of the groove in the first direction to the size of the first bendable area in the first direction is 0.5. In this way, the stress peak value of the support member in the bending process can be reduced, and the stress difference between the wave peak and the wave valley of the support member in the bending process can be reduced, thereby reducing the abnormal noise generated due to the stress difference.

In some possible implementations, there may be a plurality of grooves. In this way, the first end face of the support member may be separated into a plurality parts, and a size of each part is smaller. Therefore, in a process in which the terminal device folds or unfolds, the parts may deform more easily, so that the stress difference between the wave peak and the wave valley on the support member can be reduced, and the abnormal noise generated in the bending process of the support member can be reduced.

In some possible implementations, the bonding structure includes a first back adhesive structure disposed on the first side surface and a second back adhesive structure disposed on the second side surface. In this way, when being applied to the terminal device, the support assembly may be bonded to the flexible display by using the first back adhesive structure, and may be bonded to a folding assembly by using the second back adhesive structure. Therefore, bonding strength between the support assembly and the flexible display and the folding assembly can be improved.

In some possible implementations, the bonding structure further includes an adhesive dispensing structure, and at least a part of the adhesive dispensing structure is disposed on the first side surface and/or the second side surface. In this way, the first back adhesive structure and the adhesive dispensing structure may be bonded to the flexible display, and/or the second back adhesive structure and the adhesive dispensing structure may be bonded to the folding assembly. Therefore, bonding strength between the support assembly and the flexible display and/or the folding assembly may be further improved.

In some possible implementations, the support assembly further includes a first gasket, where the first gasket is located on the first side surface; and/or a second gasket, where the second gasket is located on the second side surface. The adhesive dispensing structure is usually formed through solidification of a viscous colloidal liquid, and the first gasket has a certain thickness. In this way, when the terminal device is manufactured, after the colloidal liquid is injected into the first side surface, the colloidal liquid can be well accommodated between the first side surface and the flexible display, so that bonding strength of the adhesive dispensing structure is relatively high.

In some possible implementations, the first side surface further includes a first non-bendable area adjacent to the first bendable area, and a projection of the first back adhesive structure is in the first non-bendable area on the first side surface. The first non-bendable area may be an area that is always in a non-foldable state in a folding process of the terminal device. In this way, the first back adhesive structure may not be easily debonded from or bonded to the flexible display, so that the abnormal noise caused by repeated debonding and bonding can be reduced as much as possible.

In some possible implementations, the second side surface includes a second foldable area and a second non-bendable area that are adjacent to each other, a projection of a part of the second back adhesive structure is in the second non-bendable area on the second side surface, and a projection of the other part of the second back adhesive structure is in the second foldable area on the second side surface. In this way, the second back adhesive structure has a relatively large bonding area, so that bonding strength between the support member and the folding assembly can be improved.

In some possible implementations, the second side surface further includes a second non-bendable area, and a projection of the second back adhesive structure is in the second non-bendable area on the second side surface. In this way, in a folding process of the terminal device, the second back adhesive structure is always in an area in a non-foldable state. In this way, the second back adhesive structure may not be easily debonded and bonded to the folding assembly, so that the abnormal noise caused by repeated debonding and bonding can be reduced as much as possible.

In some possible implementations, there is a gap between an edge of the first back adhesive structure and an edge of the first gasket; or the first back adhesive structure is in contact with the first gasket. In this way, in a process of manufacturing the terminal device, when the colloidal liquid is injected into the support member, the colloidal liquid may flow into the gap between the first back adhesive structure and the first gasket, thereby increasing a bonding area of the adhesive dispensing structure, and improving bonding strength of the adhesive dispensing structure.

In some possible implementations, a first dispensing groove for accommodating the adhesive dispensing structure is disposed on the first back adhesive structure. Because the first adhesive dispensing structure has a certain thickness, the first dispensing groove can well accommodate the colloidal liquid, so that the bonding strength of the adhesive dispensing structure can be improved.

In some possible implementations, the first dispensing groove is disposed at an edge that is of the first back adhesive structure and that faces the first gasket. If there is the gap between the first back adhesive structure and the first gasket, when the colloidal liquid is injected into the first dispensing groove, the colloidal liquid also flows into the gap. In this way, a bonding area of the adhesive dispensing structure formed after the colloidal liquid is solidified can be increased, and bonding strength can be improved. If the first back adhesive structure is in contact with the first gasket, the first gasket may be enclosed in a closed shape with the first back adhesive structure to enclose the first dispensing groove. In this way, the first dispensing groove can also well accommodate the colloidal liquid.

In some possible implementations, a second dispensing groove for accommodating the adhesive dispensing structure is disposed on the first gasket. Because the first gasket has a certain thickness, the second dispensing groove can well accommodate the colloidal liquid, so that the bonding strength of the adhesive dispensing structure can be improved.

In some possible implementations, the second dispensing groove is disposed at an edge that is of the first gasket and that faces the first back adhesive structure. If there is the gap between the first back adhesive structure and the first gasket, when the colloidal liquid is injected into the second dispensing groove, the colloidal liquid also flows into the gap. In this way, a bonding area of the adhesive dispensing structure formed after the colloidal liquid is solidified can be increased, and bonding strength can be improved. If the first back adhesive structure is in contact with the first gasket, the first gasket may be enclosed in a closed shape with the first back adhesive structure to enclose the second dispensing groove. In this way, the second dispensing groove can also well accommodate the colloidal liquid.

In some possible implementations, the first dispensing groove communicates with the second dispensing groove; or a notch of the second dispensing groove is closed. When the first dispensing groove communicates with the second dispensing groove, the first dispensing groove and the second dispensing groove may enclose accommodating space to well accommodate the adhesive dispensing structure. When the notch of the second dispensing groove is closed, the second dispensing groove can well accommodate the adhesive dispensing structure. Therefore, in this application, bonding strength of the dispensing structure can be improved.

In some possible implementations, a third dispensing groove for accommodating the adhesive dispensing structure is disposed on the support member. In this way, the support member may be further bonded to the flexible display or the folding assembly by using the adhesive dispensing structure.

In some possible implementations, the third dispensing groove extends from the first side surface to the second side surface. In this way, the support member may be further bonded to the flexible display and the folding assembly by using the adhesive dispensing structure.

In some possible implementations, a fourth dispensing groove for accommodating the adhesive dispensing structure is disposed on the second back adhesive structure. In this way, the support member may be further bonded to the folding assembly by using the adhesive dispensing structure in the fourth dispensing groove. Therefore, bonding strength between the support member and the folding assembly can be improved.

In some possible implementations, a positional relationship between the first dispensing groove, the second dispensing groove, the third dispensing groove, and the fourth dispensing groove meets at least one of the following features: the first dispensing groove communicates with the third dispensing groove; the second dispensing groove communicates with the third dispensing groove; and the fourth dispensing groove communicates with the third dispensing groove. In this way, when the terminal device is manufactured, colloidal liquid may be injected into the fourth dispensing groove, and the colloidal liquid may flow to the third dispensing groove, the first dispensing groove, and the second dispensing groove. Therefore, a manufacturing process is simple. In addition, the adhesive dispensing structure that is accommodated in the first dispensing groove, the second dispensing groove, the third dispensing groove, and the fourth dispensing groove can have a good adhesive effect on the flexible display, the first back adhesive structure, the support member, the second back adhesive structure, and the folding assembly.

In some possible implementations, an opening communicating with the fourth dispensing groove is disposed on an edge of the second back adhesive structure. In this way, when the terminal device is manufactured, the colloidal liquid may be injected into the opening, and the colloidal liquid may flow from the opening to the fourth dispensing groove. Because the opening is located on the edge of the second back adhesive structure, a process is simple and operation is convenient.

In some possible implementations, a material of the support member includes a titanium alloy or a titanium copper alloy. Because elastic modulus of the titanium alloy and the titanium copper alloy is relatively low, the support member with the low elastic modulus may be easily bent and generate less abnormal noise. Therefore, a stress difference between a wave peak and a wave valley in the bending process of the support member can be reduced, thereby reducing abnormal noise generated in the bending process. In addition, because densities of the titanium alloy and the titanium copper alloy are relatively small, a weight of the support member can be reduced, thereby reducing a weight of the entire device.

This application further provides a terminal device, including at least one of the foregoing support assemblies, where first end faces of at least two support assemblies in the plurality of support assemblies are disposed opposite to each other. The terminal device can achieve all effects of the support assembly.

In some possible implementations, in the two support assemblies whose first end faces are disposed opposite to each other, a groove on one support assembly is staggered from a groove on the other support assembly. When the support assembly provides support for the flexible display, the grooves that are staggered from each other can avoid a case in which an area that has a relatively large length and that is of the flexible display is suspended, and therefore, a service life of the flexible display can be prolonged.

In some possible implementations, the terminal device further includes a folding assembly and a flexible display, the support assembly is located between the folding assembly and the flexible display, the first side surface or the second side surface faces the flexible display, the flexible display has a third non-bendable area and a fourth non-bendable area that are opposite to each other, and a third bendable area that is located between the third non-bendable area and the fourth non-bendable area, a projection of the first bendable area of the support assembly is in the third bendable area on the flexible display, and a projection of the first non-bendable area of the support assembly on the flexible display is in the third non-bendable area or the fourth non-bendable area. The terminal device can achieve all effects of the support assembly.

### BRIEF DESCRIPTION OF DRAWINGS

To describe technical solutions in embodiments of this application more clearly, the following briefly describes accompanying drawings required for description of embodiments of this application. Apparently, the accompanying drawings in the following description show only some embodiments of this application, and a person of ordinary skill in the art may still derive other drawings from these accompanying drawings without creative efforts.
FIG. 1a is a schematic diagram of a structure of a foldable mobile phone in a semi-folded state according to an embodiment of this application;
FIG. 1b is a schematic diagram of a structure of a foldable mobile phone in an unfolded state according to an embodiment of this application;
FIG. 2a is a schematic diagram of a disassembly structure of a foldable mobile phone according to an embodiment of this application;
FIG. 2b is a schematic diagram of a structure of local assembly of the foldable mobile phone shown in FIG. 2a in a folded state;
FIG. 3 is a schematic diagram of a structure of a support member of the foldable mobile phone shown in FIG. 2a;
FIG. 4a is a diagram showing a form of the support member shown in FIG. 3 when bent;
FIG. 4b is a diagram showing another form of the support member shown in FIG. 3 when bent;
FIG. 5 is a schematic diagram of a disassembly structure of a foldable mobile phone according to another embodiment of this application;
FIG. 6 is a schematic diagram of a disassembly structure of a support assembly in the foldable mobile phone shown in FIG. 5;
FIG. 7a is a schematic diagram of a structure of the support assembly in the foldable mobile phone shown in FIG. 6 at a first angle of view when the support assembly is bent by a first angle;
FIG. 7b is a schematic diagram of a structure of the support assembly in the foldable mobile phone shown in FIG. 6 at a second angle of view when the support assembly is bent by a first angle;
FIG. 8 is a schematic diagram of a local assembly structure of the foldable mobile phone shown in FIG. 5 in a folded state;
FIG. 9a is a diagram of a finite element analysis result when a depth of a stress-relief groove of a support member is one quarter of a width of a non-back adhesive area;
FIG. 9b is a diagram of a finite element analysis result when a depth of a stress-relief groove of a support member is half a width of a non-back adhesive area;
FIG. 9c is a diagram of a finite element analysis result when a depth of a stress-relief groove of a support member is three quarters of a width of a non-back adhesive area;
FIG. 10 is a schematic diagram of a disassembly structure of a support assembly according to still another embodiment of this application;
FIG. 11 is a schematic diagram of a local assembly structure of a foldable mobile phone according to still another embodiment of this application;
FIG. 12a is a schematic diagram of a structure of a support assembly at a first angle of view when the support assembly is bent by a second angle according to yet still another embodiment of this application;
FIG. 12b is a schematic diagram of a structure of a support assembly at a second angle of view when the support assembly is bent by a second angle according to yet still another embodiment of this application; and
FIG. 13 is a schematic diagram of a structure of a support assembly according to yet still another embodiment of this application.

Reference numerals: 10-Folding assembly; 11-Movable area; 12-Non-movable area; 20-Flexible display; 21-Bendable area 22-Non-bendable area; 30-Support assembly; 31-Support member; 311-Stress-relief groove; 312-Avoidance groove; 313-Support member dispensing groove; 314-Free end; 32-Upper back adhesive structure; 321-Back adhesive opening; 322-Back adhesive edge; 33-Adhesive dispensing structure; 34-Gasket; 341-Gasket edge; 342-Gasket opening; 343-Combined dispensing groove; 344-Gasket dispensing groove; 35-Lower back adhesive structure; 351-Lower back adhesive dispensing groove; 352-Injection hole; 36-Back adhesive structure.

### DESCRIPTION OF EMBODIMENTS

The following clearly and completely describes the technical solutions in embodiments of this application with reference to the accompanying drawings in the embodiments of this application. Apparently, the described embodiments are merely some rather than all of embodiments of this application. Based on the embodiments of this application, all other embodiments obtained by a person of ordinary skill in the art without creative efforts fall within the protection scope of this application.

In this specification, the term "and/or" merely describes an association relationship between associated objects, and indicates that three relationships may exist. For example, A and/or B may indicate the following three cases: Only A exists, both A and B exist, and only B exists.

The terms "first", "second", and the like in the specification and claims of embodiments of this application are used to distinguish between different objects, and are not used to indicate a specific sequence of objects. For example, a first target object, a second target object, and the like are used to distinguish between different target objects, and are not used to indicate a specific order of target objects.

In embodiments of this application, the word such as "as an example" or "for example" is used to represent giving an example, an illustration, or a description. Any embodiment or design scheme described as "as an example" or "for example" in embodiments of this application should not be explained as being preferred or having more advantages than another embodiment or design scheme. To be precise, the use of the word such as "as an example" or "for example" is intended to present a related concept in a specific manner.

In the description of embodiments of this application, unless otherwise stated, "a plurality of" means two or more. For example, a plurality of processing units refer to two or more processing units, and a plurality of systems refer to two or more systems.

An embodiment of this application provides a support assembly, and the support assembly may be applied to a foldable mobile phone. The support assembly 30 may be further applied to another terminal device with a folding function, such as a foldable tablet computer, a foldable game machine, and a personal digital assistant (personal digital assistant, PDA).

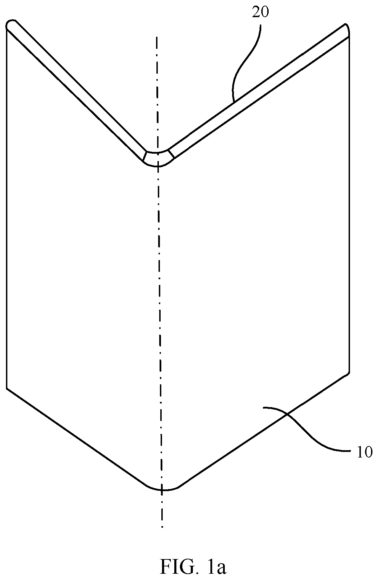

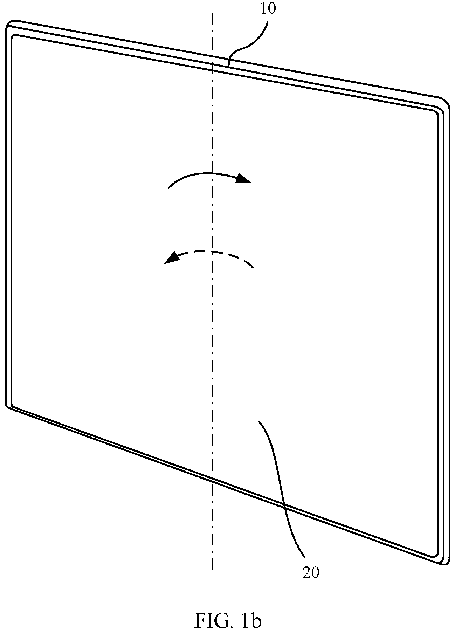

As shown in FIG. 1a and FIG. 1b, the foldable mobile phone includes at least a folding assembly 10 and a flexible screen 20 fastened to one surface of the folding assembly 10. The folding assembly 10 can be folded or unfolded to drive folding or unfolding of the flexible screen 20. The foldable mobile phone may be an inward foldable mobile phone, that is, the flexible display 20 is located on the inner side the folding assembly 10. The foldable mobile phone may alternatively be an outward foldable mobile phone, that is, the flexible display 20 is located on the outer side of the folding assembly 10. When the foldable mobile phone is an inward foldable mobile phone, when a folding angle of the folding assembly 10 is 0, the flexible display 20 is completely wrapped inside the folding assembly 10, which can reduce a size of the foldable mobile phone and protect the flexible display 20. When the folding assembly 10 completely unfolds, that is, an angle of the folding assembly 10 is 180°, the flexible display 20 is in a flattened state, and provides a maximum display area. In this case, a user may perform an operation on the flexible display 20.

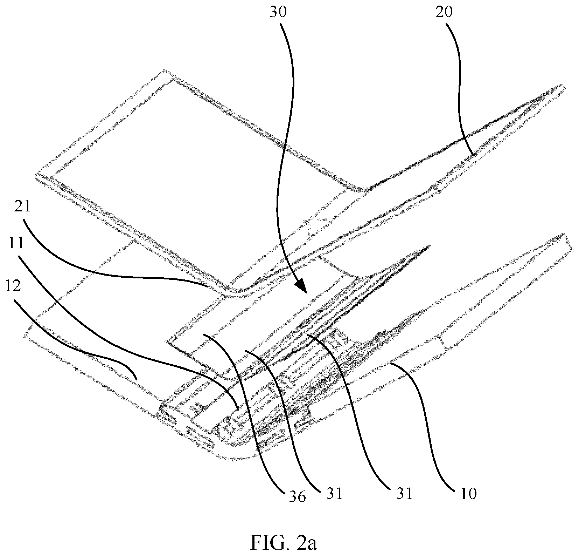

As shown in FIG. 2a, the foldable mobile phone further includes a support assembly 30 fastened between the folding assembly 10 and the flexible display 20. It can be learned from FIG. 2a that the folding assembly 10 needs to implement folding and unfolding of the flexible display 20, and the folding assembly 10 has a complex structure. Therefore, there may be a structure such as a gap, a protrusion, a groove, and an assembly hole on one side that is of the folding assembly 10 and that faces the flexible display 20, that is, there may be a protrusion or a depression on one side of the flexible display 20, and in particular, there are more protrusions or depressions in a movable area 11 that implements bending of the folding assembly 10. When the foldable mobile phone is in a flattened state, these structures on the folding assembly 10 affect flatness of the flexible display 20, the flexible display 20 feels rough when a user finger touches or scratches the flexible display 20, and these structures also reduce a service life of the flexible display 20. Therefore, the support assembly 30 that is located between the flexible display 20 and the folding assembly 10 and that can provide support for the flexible display 20 is particularly important.

In an embodiment of this application, as shown in FIG. 2a, the support assembly 30 includes two opposite support members 31 and a plurality of back adhesive structures 36. The plurality of back adhesive structures 36 are respectively disposed between the support member 31 and the flexible display 20 and between the support member 31 and the folding assembly 10. The back adhesive structures 36 can bond the flexible display 20, the support member 31, and the folding assembly 10. The support 31 is a metal sheet, and the metal sheet covers the rough movable area 11 on the folding assembly 10 and a part of a non-movable area 12 on the folding assembly 10 other than the movable area 11.

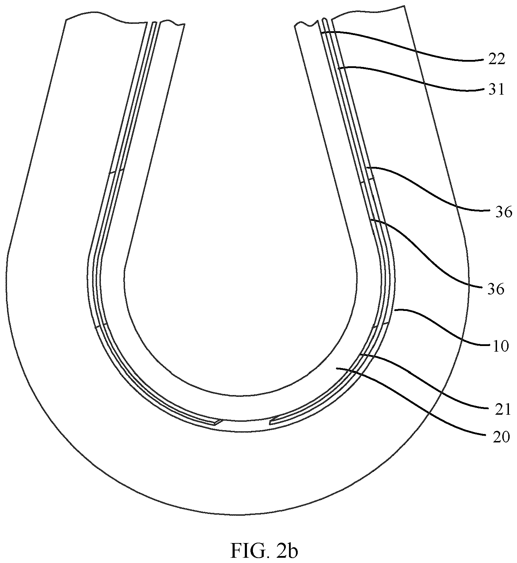

To ensure bonding strength between the flexible display 20 and the folding assembly 10, a width of the back adhesive structure 36 should meet a predetermined width requirement. As shown in FIG. 2b, a part of the back adhesive structure 36 is covered in a non-bendable area 22 of the flexible display 20, and the other part of the back adhesive structure 36 is covered in a bendable area 21 of the flexible display 20. The bendable area 21 is an area in which an outer surface of the flexible display 20 is an arc surface when the foldable mobile phone is folded. In a folding or unfolding process of the foldable mobile phone, curvature of the bendable area 21 changes constantly, a bendable area 21 of the flexible display 20 is far away from a center of the flexible display 20, a distance between the flexible display 20 and the center of the flexible display 20 changes constantly, and the back adhesive structure 36 and the flexible display 20 are constantly subjected to a shear force. Therefore, the back adhesive structure 36 that covers the bendable area 21 may be detached due to pulling of the flexible display 20. When the foldable mobile phone folds or unfolds to a certain angle and stops, the back adhesive structure 36 is rebonded to the flexible display 20. However, a folding or unfolding frequency of the foldable mobile phone is relatively high. Therefore, the back adhesive structure 36 that covers the bendable area 21 is repeatedly bonded to and debonded from the flexible display 20, and consequently, abnormal noise is generated.

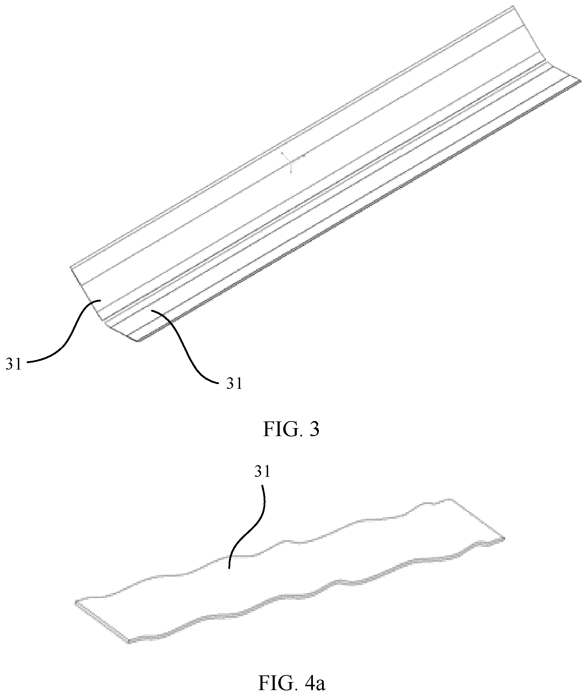

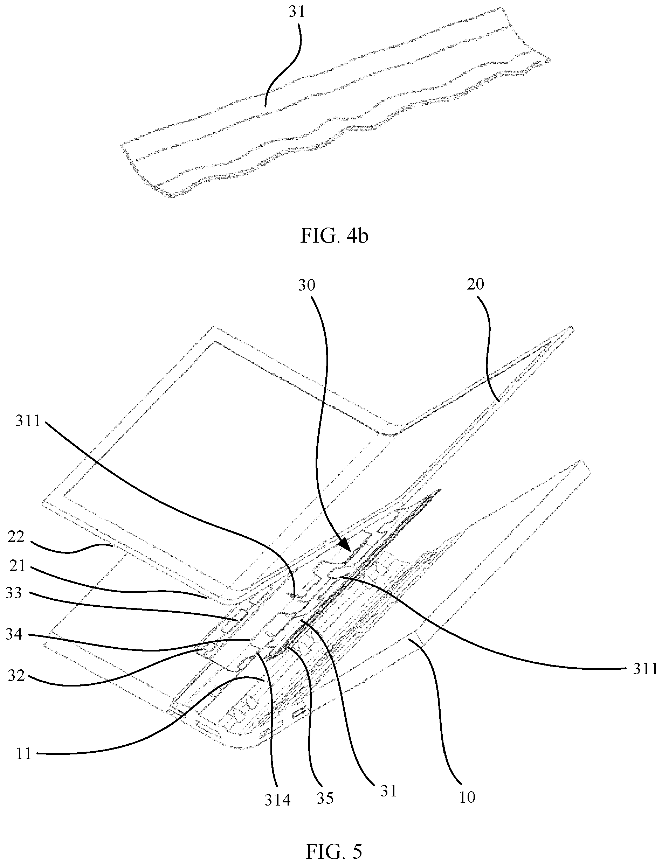

In addition, as shown in FIG. 3, a material of the support 31 is SUS301 stainless steel. Edges of the support member 31 are all linear. As shown in FIG. 2a, in a process of folding or unfolding the foldable mobile phone, both the movable area 11 of the folding assembly 10 and the bendable area 21 of the flexible display 20 are bent, and the support member 31 is also bent. A thickness of the metal sheet is usually small. Therefore, as shown in FIG. 4a and FIG. 4b, in the bending process, a surface of the support member 31 is not a smooth curved surface, but is an undulating curved surface. In the bending process, a wave peak and a wave valley on a bending arc face are stressed unevenly, resulting in stress difference (which can be referred to as bending stress). After the bending stops, the bending stress is released, and the metal sheet vibrates due to the stress difference, and consequently, abnormal noise is generated.

Based on this, as shown in FIG. 5, in another embodiment of this application, a foldable mobile phone includes a folding assembly 10, a flexible display 20 fastened on one side of the folding assembly 10, and a support assembly 30 fastened between the folding assembly 10 and the flexible display 20.

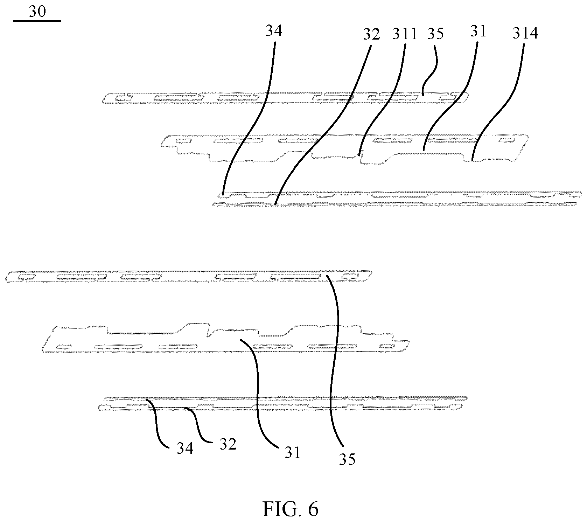

As shown in FIG. 6, the support assembly 30 includes two opposite support members 31, an upper back adhesive structure 32, a lower back adhesive structure 35, an adhesive dispensing structure 33 (not shown in FIG. 6), and a gasket 34. As shown in FIG. 5, a part of an area of the support member 31 away from a center of the flexible display 20 is bonded to the flexible display 20 by using the upper back adhesive structure 32 and the adhesive dispensing structure 33. The part of the area of the support member 31 away from the center of the flexible display 20 is bonded to the folding assembly 10 by using the lower back adhesive structure 35 and the adhesive dispensing structure 33.

As shown in FIG. 5, one end of the support member 31 near the center of the flexible display 20 is a free end 314, and free ends 314 of the two support members 31 are opposite to each other, and there is a gap between the free ends 314 of the two support members 31, to adapt to a change of curvature of a bendable area 21 in a process of folding or unfolding the foldable mobile phone.

As shown in FIG. 6, the support member 31 is usually a metal sheet, and has two long edges and two short edges, where one of the long edges is the free end 314. A stress-relief groove 311 is disposed on the free end 314 of the support member 31. In this way, the stress-relief groove 311 may separate the free end 314 into a plurality of parts, and a size of each part along a direction of the long edge of the support member 31 is smaller than a size of the long edge of the support member 31. Therefore, in a process of folding or unfolding the foldable mobile phone, each part may deform more easily, thereby reducing stress difference between the wave peak and the wave valley on the support member 31, and then reducing abnormal noise generated in a process of bending the support member 31.

In this embodiment, as shown in FIG. 6, there may be one stress-relief groove 311, and the one stress-relief groove 311 may be disposed near a middle position of the support member 31. In another embodiment of this application, there are a plurality of stress-relief grooves 311, and the plurality of stress-relief grooves 311 are evenly disposed along the free end 314 of the support member 31. In this way, a noise reduction function can be better.

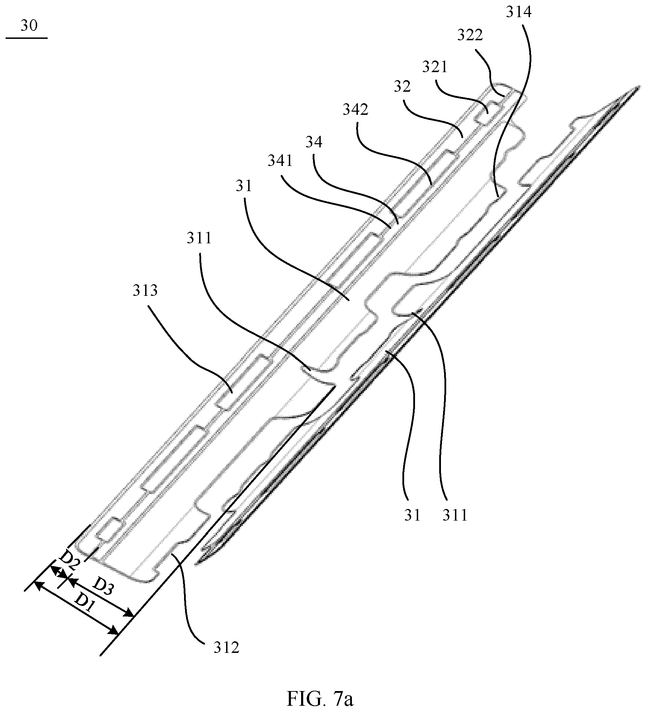

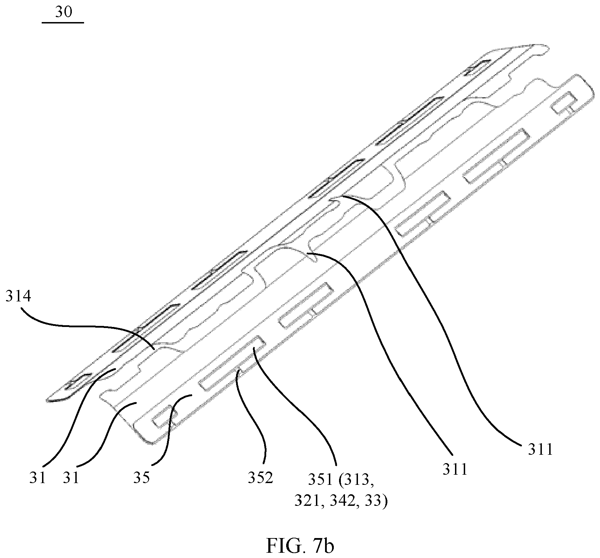

As shown in FIG. 7a and FIG. 7b, positions of the stress-relief grooves 311 on the two support members 31 of the support assembly 30 are staggered. If the positions of the stress-relief grooves 311 on the two support members 31 correspond to each other, when the foldable mobile phone is in a flattened state, the flexible display 20 is suspended in the position of the stress-relief groove 311 without support, and a length of an area that is suspended is greater than a sum of lengths of the two stress-relief grooves 311. In this way, a crack may easily occur due to the relatively long suspended area of the flexible display 20. Therefore, the positions of the stress-relief grooves 311 on the two support members 31 of the support assembly 30 are staggered, and a service life of the flexible display 20 can be prolonged to a certain extent.

It should be noted that FIG. 7a is a schematic diagram of a structure of the support assembly 30 at a first angle of view when the support assembly 30 is bent by a first angle. FIG. 7b is a schematic diagram of a structure of the support assembly 30 in FIG. 7a at a second angle of view when the support assembly 30 is bent by the first angle. A direction of the first angle of view is opposite to a direction of the second angle of view. That is, FIG. 7b is a view obtained by rotating 180° after projecting from a back of FIG. 7a toward a front of FIG. 7a. A bonding structure between the support member 31 and the flexible display 20 may be learned from FIG. 7a, and a bonding structure between the support member 31 and the folding assembly 10 may be learned from FIG. 7b.

As shown in FIG. 7a, assuming that a total width of the support member 31 is D1, a width of an area of the support member 31 fastened with the upper back adhesive structure 32 is D2, and on a surface of the support member 31 fastened with the upper back adhesive structure 32, a width of an area (a non-bonding area) not fastened with the upper bonding structure 32 is D3, D1=D2+D3.

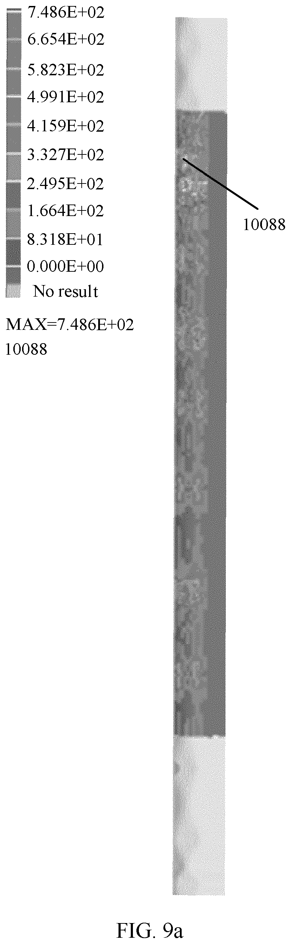

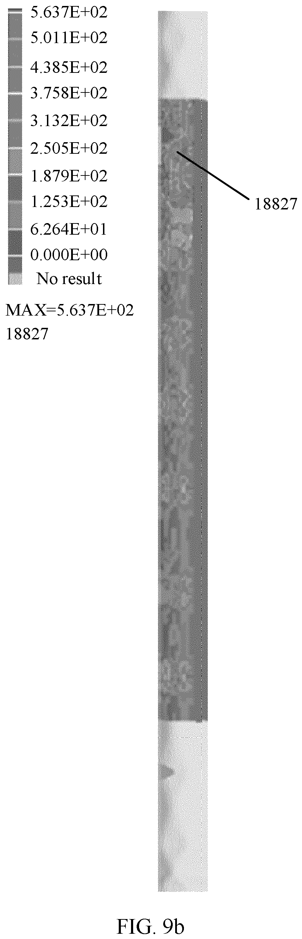

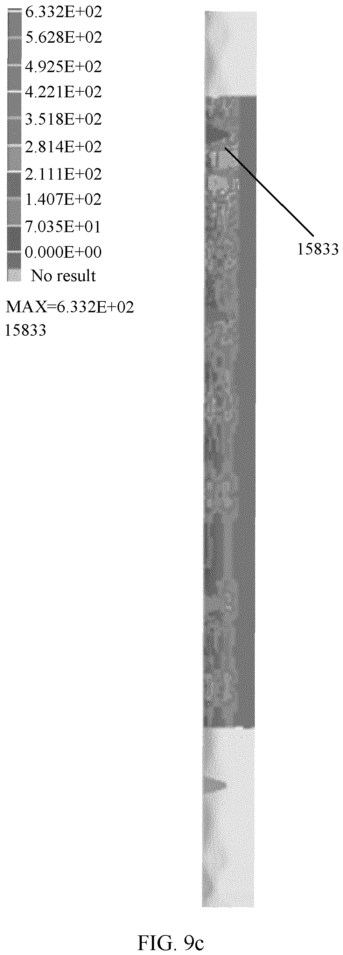

In this embodiment, a finite element analysis is performed on the support member 31, where a depth of the stress-relief groove 311 is respectively one quarter, one half, and three quarters of a width of a remaining area of the support member 31. For analysis results, refer to FIG. 9a, FIG. 9b, and FIG. 9c. It may be learned from FIG. 9a to FIG. 9c that, when the depth of the stress-relief groove 311 is one quarter of the width D3 of the non-back adhesive area of the support member 31, a maximum stress of the support member 31 is 748.6Mpa; when the depth of the stress-relief groove 311 is one half of the width D3 of the non-back adhesive area of the support member 31, the maximum stress of the support member 31 is 563.7Mpa; and when the depth of the stress-relief groove 311 is three quarters of the width D3 of the non-back adhesive area of the support member 31, the maximum stress of the support member 31 is 633.2Mpa. Therefore, when the depth of the stress-relief groove 311 is one half of the width of the non-back adhesive area of the support member 31, a stress peak value of the support member 31 is minimum; and when the depth of the stress-relief groove 311 is larger or smaller, the stress peak value is greater, stress between the wave peak and the wave valley is also greater, and abnormal noise is also greater in the bending process. Therefore, a depth of the stress-relief groove 311 may be set to one half of the width D3 of the non-back adhesive area of the support member 31. In this way, a peak stress generated on the support member 31 in a folding or spreading process of the foldable mobile phone can be relatively small, so that stress difference between a wave peak and a wave valley can be reduced, and abnormal noise generated due to a relatively large stress can be reduced.

It should be noted that the back adhesive area of the support member 31 may be an area in which a plane is always maintained on one side that is of the support member 31 and that faces the flexible display 20, and the non-back adhesive area of the support member 31 may be an area that bends along with bending of the folding assembly 10 on one side that is of the support member 31 and that faces the flexible display 20.

In another embodiment of this application, the depth of the stress-relief groove 311 may be set to 35%-65% of the width D3 of the non-back adhesive area of the support member 31. With reference to the analysis results of finite element analysis performed on the support member 31 in FIG. 9a to FIG. 9c, it can be learned that when the depth of the stress-relief groove 311 is close to one half of the width D3 of the non-back adhesive area of the support member 31, stress of the stress-relief groove 311 is smaller. Therefore, the depth of the stress-relief groove 311 is set to 35%-65% of the width D3 of the non-back adhesive area of the support member 31. In a process of folding or unfolding the foldable mobile phone, a stress difference generated on the support member 31 is relatively small, thereby reducing abnormal noise caused by the stress difference.

In addition, it may be learned from FIG. 5 that local features such as screws, protrusions, and grooves are disposed on one side that is of the folding assembly 10 and that faces the flexible display 20. Therefore, as shown in FIG. 7a, a plurality of avoidance grooves 312 are disposed on the support member 31 to prevent scratching, which can reduce abnormal noise generated when the support member 31 collides with the folding assembly 10 in a folding or unfolding process of the foldable mobile phone, thereby further reducing abnormal noise of the foldable mobile phone.

As shown in FIG. 7a, six support member dispensing grooves 313 are disposed on the support member 31, and the six support member dispensing grooves 313 are arranged symmetrically with a center of the support member 31. That is, three support member dispensing grooves 313 are disposed on each side of the center of the support member 31. Lengths of the three support member dispensing grooves 313 are different.

In another embodiment of this application, a quantity of the support member dispensing grooves 313 may be less than six or more than six. When a quantity of the support member dispensing grooves 313 is one, the one support member dispensing groove 313 is disposed in a middle part in a longitudinal direction of the support member 31.

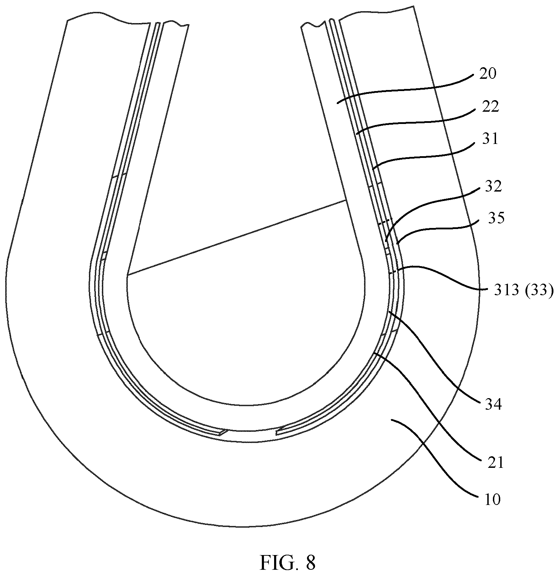

As shown in FIG. 8, a projection of a part of the support member dispensing groove 313 is in the bendable area 21 on the flexible display 20, and a projection of the other part of the support member dispensing groove 313 on the flexible display 20 is in the non-bendable area 22 other than the bendable area 21 on the flexible display 20.

The support member 31 may use a metal with a low density and a low elastic modulus, and may specifically use a TI alloy (titanium alloy), a TI-Cu alloy (titanium copper alloy), or the like. For example, an elastic modulus of the TI alloy TA4 is 116Gpa, and a material of the support member 31 in the embodiment shown in FIG. 2a is SUS301 stainless steel, and an elastic modulus of the support member 31 is 194Gpa. The elastic modulus of the titanium alloy TA4 is lower than the elastic modulus of the SUS301. According to Hooke's law, a metal sheet with a low elastic modulus is easier to bend than to generate abnormal noise. Therefore, by using a metal with a low elastic modulus, the support member 31 can reduce a stress difference between a wave peak and a wave valley in the bending process of the metal sheet, thereby reducing abnormal noise generated in the bending process. In addition, because a metal such as the TI alloy or the TI-Cu alloy has a relatively low density, the support member 31 can further reduce a weight of the support member 31 by using the TI alloy or the TI-Cu alloy, thereby reducing a weight of the entire device.

As shown in FIG. 5, the upper back adhesive structure 32 is fastened between the flexible display 20 and the support member 31. The upper back adhesive structure 32 is strip-like. A projection of the upper back adhesive structure 32 on the flexible display 20 is in the non-bendable area 22 of the flexible display 20. That is, the upper back adhesive structure 32 does not overlap the bendable area 21. In this way, in a folding or unfolding process of the foldable mobile phone, the upper back adhesive structure 32 may not be easily debonded from or bonded to the flexible display 20. Therefore, abnormal noise caused by repeated debonding and bonding can be reduced as much as possible.

As shown in FIG. 7a, the upper back adhesive structure 32 has a back adhesive edge 322 facing the free end 314, upper back adhesive openings 321 are disposed on the back adhesive edge 322, and a quantity of the upper back adhesive openings 321 is the same as a quantity of the support par dispensing grooves 313, and both are six. In addition, disposing positions of the back adhesive openings 321 in the upper back adhesive structure 32 correspond to disposing positions of the support member dispensing grooves 313 in the support member 31. The six back adhesive openings 321 are in a one-to-one correspondence with and connected to the six support member dispensing grooves 313. For example, projections of the six back adhesive openings 321 are respectively in the six support member dispensing grooves 313 on the support member 31.

As shown in FIG. 5, the lower back adhesive structure 35 is fastened between the support member 31 and the folding assembly 10.

As shown in FIG. 6 and FIG. 8, the lower back adhesive structure 35 is different from the upper back adhesive structure 32. The lower back adhesive structure 35 is also strip-like, and a width of the lower back adhesive structure 35 is greater than a width of the upper back adhesive structure 32. Specifically, as shown in FIG. 8, a projection of the lower back adhesive structure 35 on the flexible display 20 covers both the non-bendable area 22 and the bendable area 21. In this way, bonding strength between the lower back adhesive structure 35 and the folding assembly 10 can meet a use requirement.

As shown in FIG. 7b, there are lower back adhesive dispensing grooves 351 disposed on the lower back adhesive structure 35, and a quantity of the lower back adhesive dispensing grooves 351 is the same as a quantity of support member dispensing grooves 313. Disposing positions of the lower back adhesive dispensing grooves 351 correspond to those of the support member dispensing grooves 313. The six lower back adhesive dispensing grooves 351 are in a one-to-one correspondence with and connected to the six support member dispensing grooves 313. For example, projections of the six lower back adhesive dispensing grooves 351 on the support member 31 coincide with the plurality of support member dispensing grooves 313 in one-to-one correspondences.

As shown in FIG. 7b, an injection hole 352 that extends inwardly is further disposed on an edge of the lower back adhesive structure 35, the injection hole 352 is disposed on a side that is far away from the free end 314, and the injection hole 352 is connected to the lower back adhesive dispensing groove 351. In this way, in a process of manufacturing the foldable mobile phone, after the folding assembly 10, the support member 31, the upper back adhesive structure 32, and the lower back adhesive structure 35 are assembled together, a colloidal liquid may be injected into the injection hole 352, and the colloidal liquid may flow from the injection hole 352 to the lower back adhesive dispensing groove 351 for easy processing.

Further, as shown in FIG. 7b, a quantity of injection holes 352 is the same as a quantity of lower back adhesive dispensing grooves 351, and positions are in a one-to-one correspondence. For example, there are six injection holes 352. In this way, in a process of manufacturing the foldable mobile phone, the colloidal liquid may be injected into each injection hole 352, and the colloidal liquid may flow to each lower back adhesive dispensing groove 351 through each injection hole 352, so that the colloidal liquid can be evenly distributed in each lower back adhesive dispensing groove 351.

With reference to FIG. 8, it may be learned that a bonding structure between the support member 31 and the flexible display 20 includes an upper back adhesive structure 32, an adhesive dispensing structure 33, and a gasket 34; and the support member 31 and the flexible display 20 are bonded by using the upper back adhesive structure 32 and the adhesive dispensing structure 33. A bonding structure between the support member 31 and the folding assembly 10 includes a lower back adhesive structure 35 and an adhesive dispensing structure 33; and the support member 31 and the folding assembly 10 are bonded by using the lower back adhesive structure 35 and the adhesive dispensing structure 33. Debonding mainly occurs between the flexible display 20 and the support member 31. Therefore, only the lower back adhesive structure 35 and the adhesive dispensing structure 33 are disposed between the support member 31 and the folding assembly 10, and neither gasket 34 nor adhesive dispensing structure 33 is disposed between the support member 31 and the folding assembly 10. This simplifies a process flow, thereby reducing processing costs.

It should be noted that the upper back adhesive structure 32 and the lower back adhesive structure 35 each may be a structure with an adhesive function, and may be specifically an adhesive tape, such as a double-sided tape or an adhesive film.

As shown in FIG. 5, the gasket 34 is disposed between the support member 31 and the flexible display 20, and a projection of the gasket 34 on the support member 31 may cover a part of the support member 31, and a projection of the gasket 34 on the support member 31 does not overlap a projection of the upper back adhesive structure 32 on the support member 31.

As shown in FIG. 7a, there may be a gap between a gasket edge 341 of the gasket 34 and a back adhesive edge 322 of the upper back adhesive structure 32. Gasket openings 342 are disposed on the gasket 34, and the gasket openings 342 are disposed on the gasket edge 341 of the gasket 34 near the upper back adhesive structure 32. A quantity of the gasket openings 342 is the same as a quantity of the upper back adhesive openings 321, and both are six. Disposing positions of the gasket openings 342 on the gasket 34 correspond to disposing positions of the upper back adhesive openings 321 on the upper back adhesive structure 32. The gasket openings 342, the upper back adhesive openings 321 on the upper back adhesive structure 32, and the gap between the gasket 34 and the upper back adhesive structure 32 may form a relatively large accommodating space, and the support member dispensing groove 313 is located in a projection of the accommodating space on the support member 31. In this way, as shown in FIG. 7b, when the colloidal liquid is injected into the injection hole 352, the colloidal liquid may be successively injected to the injection hole 352, the lower back adhesive dispensing groove 351, the support member dispensing groove 313, the upper back adhesive opening 321, the gasket opening 342, and the gap, to perform auxiliary bonding on the flexible display 20, the support member 31, and the folding assembly 10 shown in FIG. 5. In this way, a larger amount of colloidal liquid may be accommodated. Because the colloidal liquid clots to form the adhesive dispensing structure 33, an area of the adhesive dispensing structure 33 can be increased. This improves bonding strength between the folding assembly 10, the support member 31, and the flexible display 20, thereby reducing a case in which the upper back adhesive structure 32 is debonded from the flexible display 20 or the support member 31, and further reducing abnormal noise caused by debonding.

In addition, as shown in FIG. 7b, a quantity of injection holes 352 is the same as a quantity of lower back adhesive dispensing grooves 351, and their positions are in a one-to-one correspondence. In this way, when a foldable mobile phone is manufactured, a colloidal liquid may be injected into each injection hole 352, and the colloidal liquid in each injection hole 352 may flow through the lower back adhesive dispensing groove 351 and the support member dispensing groove 313 into the gap between the upper back adhesive structure 32 and the gasket 34. Therefore, the adhesive dispensing structure 33 formed by the colloidal liquid can be distributed in the gap as evenly as possible, thereby further improving bonding strength between the support member 31 and the flexible display 20.

In this embodiment of this application, a thickness of the gasket 34 is the same as a thickness of the upper back adhesive structure 32. In this way, in a process of performing a rolling process after the flexible display 20, the support 31, and the folding assembly 10 are assembled, each dispensing groove can properly accommodate dispensed adhesive. In addition, a problem such as a partial depression of a screen due to non-uniform thickness of both sides of the support member 31 can be avoided, to reduce a light-shadow depression effect of a surface on which adhesive is dispensed.

In this embodiment of this application, the gasket 34 may be an adhesive-free gasket 34, and may be specifically an adhesive-free film. In this way, in a folding or unfolding process of a foldable mobile phone, the adhesive-free film does not debonded from the flexible display 20, and no extra abnormal noise is generated.

As shown in FIG. 7b, the adhesive dispensing structure 33 is disposed in a gap between the lower back adhesive dispensing groove 351, the support member dispensing groove 313, the upper back adhesive opening 321, the gasket opening 342, the gasket edge 341, and the back adhesive edge 322. Specifically, the adhesive dispensing structure 33 may be a structure formed when the colloidal liquid flows through the injection hole 352 to the lower back adhesive dispensing groove 351, the support member dispensing groove 313, the upper back adhesive opening 321, and the gasket opening 342 after the colloidal liquid is injected into the injection hole 352 in a process of manufacturing the foldable mobile phone. The adhesive dispensing structure 33 can improve bonding strength between the flexible display 20 and the folding assembly 10, so that in a process of folding or unfolding a foldable mobile phone, the upper back adhesive structure 32 and the flexible display 20 and the support member 31, as well as the lower back adhesive structure 35 and the support member 31 and the folding assembly 10 may not be easily debonded. Therefore, abnormal noise caused by the debonding can be reduced to a certain extent.

In addition, as shown in FIG. 8, because a projection of a part of the support member dispensing groove 313 is in the bendable area 21 on the flexible display 20, and a projection of the other part is in the non-bendable area 22 on the flexible display 20, a projection of a part of the adhesive dispensing structure 33 is in the bendable area 21 on the flexible display 20, and a projection of the other part is in the non-bendable area 22 on the flexible display 20.

Further, the adhesive dispensing structure 33 may be solidified by using adhesive.

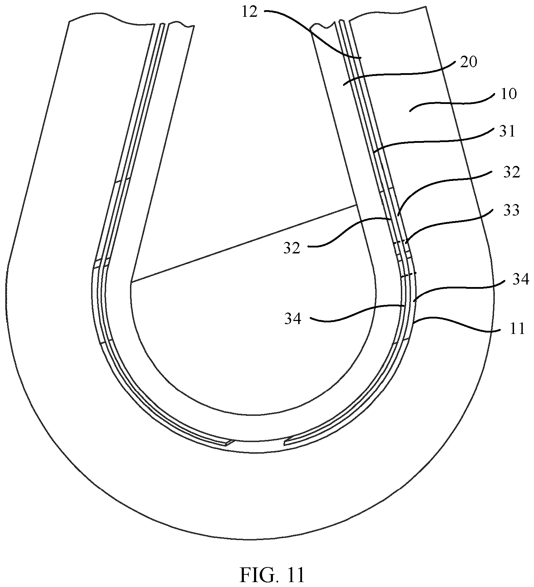

In another embodiment of this application, a difference from the embodiment shown in FIG. 8 lies in that a bonding structure between a support member 31 and a folding assembly 10 is different. Specifically, in the embodiment shown in FIG. 8, an upper back adhesive structure 32, an adhesive dispensing structure 33, and a gasket 34 are disposed between the support member 31 and the flexible display 20, and only a lower back adhesive structure 35 and an adhesive dispensing structure 33 are disposed between the support member 31 and the folding assembly 10. That is, the bonding structure between the support member 31 and the flexible display 20 is different from the bonding structure between the support member 31 and the folding assembly 10. In this embodiment, as shown in FIG. 11, a bonding structure between a support member 31 and a folding assembly 10 is the same as a bonding structure between the support 31 and a flexible display 20.

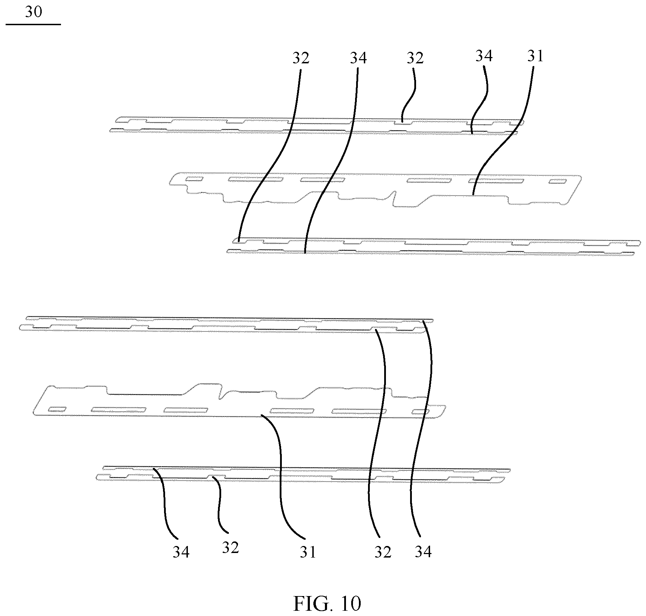

Specifically, as shown in FIG. 10, an upper bonding structure 32 and a gasket 34 are disposed on both sides of the support member 31. That is, with reference to FIG. 11, an upper back adhesive structure 32, an adhesive dispensing structure 33, and a gasket 34 are also disposed between the support member 31 and the folding assembly 10. A projection of the upper back adhesive structure 32 between the support member 31 and the folding assembly 10 on the folding assembly 10 is in a non-movable area 12 of the folding assembly 10, that is, the upper back adhesive structure 32 does not overlap a movable area 11. In this way, in a folding or unfolding process of the foldable mobile phone, the upper back adhesive structure 32 is not debonded from or bonded to the flexible display 10. Therefore, abnormal noise caused by repeated debonding and bonding can be reduced as much as possible. Further, in addition to the upper bonding structure 32, an adhesive dispensing structure 33 is further disposed between the support member 31 and the folding assembly 10. Therefore, bonding strength between the support member 31 and the folding assembly 10 can meet a strength requirement.

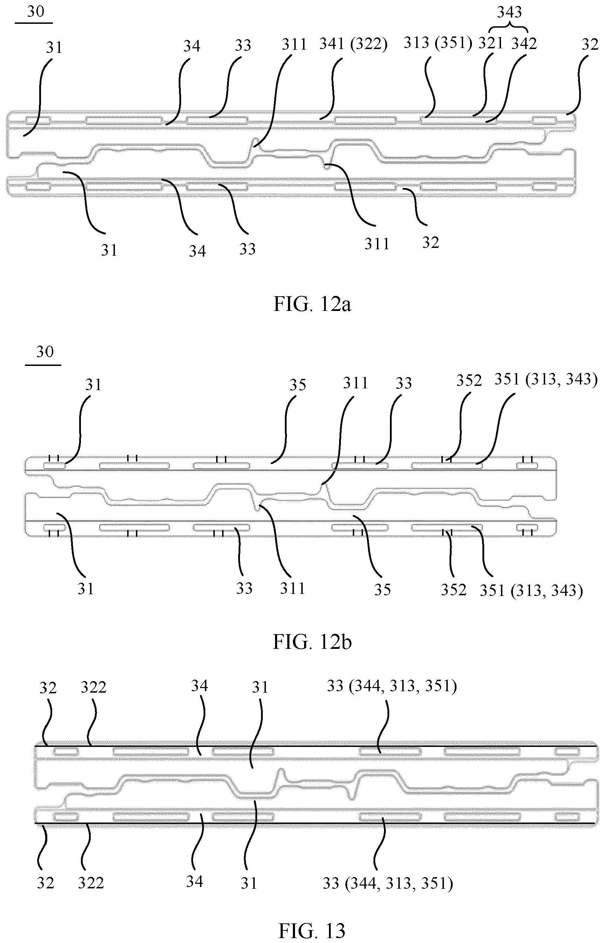

In another embodiment of this application, a difference from the embodiment shown in FIG. 8 lies in a positional relationship between the gasket 34 and the upper back adhesive structure 32, and the adhesive dispensing structure 33. Specifically, as shown in FIG. 12a, a gasket edge 341 of the gasket 34 is in contact with a back adhesive edge 322 of the upper back adhesive structure 32, a gasket opening 342 is disposed on the gasket edge 341 of the gasket 34 near the upper back adhesive structure 32, and a position of the gasket opening 342 on the gasket 34 corresponds to a position of the upper back adhesive opening 321 on the upper back adhesive structure 32. Therefore, the gasket opening 342 and the upper back adhesive opening 321 form a combined dispensing groove 343. The combined dispensing groove 343 communicates with the support member dispensing groove 313. Specifically, a projection of the combined dispensing groove 343 on the support member 31 coincides with the support member dispensing groove 313. In this way, the support member dispensing groove 313, the lower back adhesive dispensing groove 351, and the combined dispensing groove 343 communicate with each other. When a foldable mobile phone is manufactured, as shown in FIG. 12b, when the colloidal liquid is injected into the injection hole 352 of the lower back adhesive structure 35, the colloidal liquid may flow to the lower back adhesive dispensing groove 351, the support member dispensing groove 313, and the combined dispensing groove 343 successively through the injection hole 352 to form the adhesive dispensing structure 33.

The adhesive dispensing structure 33 may perform auxiliary bonding on the flexible display 20, the support member 31, and the folding assembly 10. Because cross-sectional shapes of the lower back adhesive dispensing groove 351, the support member dispensing groove 313, and the combined dispensing groove 343 are all in closed shapes, the colloidal liquid can be well accommodated, so that the adhesive dispensing structure 33 formed after the colloidal liquid is solidified can provide a good adhesive effect on the flexible display 20, the support member 31, and the folding assembly 10.

In another embodiment of this application, a difference from the embodiment shown in FIG. 8 lies in a structure of an upper back adhesive structure 32, a structure of a gasket 34, and a disposing position of an adhesive dispensing structure 33. Specifically, as shown in FIG. 13, in this embodiment, a back adhesive edge 322 of the upper back adhesive structure 32 is linear. For example, an upper back adhesive opening 321 is not disposed on the upper back adhesive structure 32. A gasket dispensing groove 344 in a closed shape is disposed on the gasket 34, the gasket dispensing groove 344, the support member dispensing groove 313, and the lower back adhesive dispensing groove 351 communicate with each other, and a projection of the gasket dispensing groove 344 on the support member 31 and a projection of the lower back adhesive dispensing groove 351 on the support member 31 both coincide with the support member dispensing groove 313.

It should be noted that a projection of the support member dispensing groove 313 on the flexible display 20 may be in the bendable area 21 of the flexible display 20. In this way, a projection of the adhesive dispensing structure 33on the flexible display 20 is in the bendable area 21 of the flexible display 20. Because the back adhesive edge 322 of the upper back adhesive structure 32 is linear, the upper back adhesive structure 32 in this embodiment has a larger back adhesive area, so that bonding strength between the support member 31 and the flexible display 20 can be further improved, and abnormal noise generated due to debonding between the support member 31 and the flexible display 20 is reduced.

Embodiments of this application are described with reference to the accompanying drawings. However, this application is not limited to the foregoing specific implementations. The foregoing specific implementations are merely examples, but are not limiting. A person skilled in the art may make many forms without departing from the object and the scope of the claims of this application and are within the protection scope of this application.

## Claims

1. A support assembly (30) for a flexible display, comprising:
a support member (31), wherein the support member (31) has a first side surface and a second side surface that are opposite to each other, and a first end face (314) connected between the first side surface and the second side surface, the first side surface comprises at least a first bendable area, the first bendable area is connected to the first end face (314), and a groove is disposed on the first end face (314);
**characterised in that** a ratio of a size of the groove in a first direction to a size of the first bendable area in the first direction is in the range of 0.35-0.65, and the first direction is a depth direction of the groove.

2. The support assembly (30) according to claim 1, wherein the support member (31) further comprises a second end face (314) opposite to the first end face (314), the second end face (314) is a fastened end face (314), and the first end face (314) is a free end face (314).

3. The support assembly (30) according to claim 1 or 2, wherein a notch is disposed on both ends of the first end face.

4. The support assembly (30) according to any one of claims 1 to 3, wherein the ratio of the size of the groove in the first direction to the size of the foldable area in the first direction is 0.5.

5. The support assembly (30) according to any one of claims 1 to 4, wherein there are a plurality of grooves.

6. The support assembly (30) according to any one of claims 1 to 5, wherein the support assembly (30) further comprises a bonding structure, the bonding structure comprises a first back adhesive structure (36) disposed on the first side surface and/or a second back adhesive structure (36) disposed on the second side surface.

7. The support assembly (30) according to claim 6, wherein the bonding structure further comprises an adhesive dispensing structure (33), and at least a part of the adhesive dispensing structure (33) is disposed on the first side surface and/or the second side surface.

8. The support assembly (30) according to claim 7, wherein the support assembly (30) further comprises:
a first gasket, wherein the first gasket is located on the first side surface; and/or
a second gasket, wherein the second gasket is located on the second side surface.

9. The support assembly (30) according to any one of claims 6 to 8, wherein the first side surface further comprises a first non-bendable area adjacent to the first bendable area, and a projection of the first back adhesive structure (36) is in the first non-bendable area on the first side surface.

10. The support assembly (30) according to any one of claims 6 to 9, wherein the second side surface comprises a second foldable area and a second non-bendable area that are adjacent to each other, a part of a projection of the second back adhesive structure (36) is in the second non-bendable area on the second side surface, and the other part of a projection of the second back adhesive structure (36) is in the second foldable area on the second side surface.

11. The support assembly (30) according to any one of claims 6 to 9, wherein the second side surface comprises a second non-bendable area, and a projection of the second back adhesive structure (36) is in the second non-bendable area on the second side surface.

12. A foldable terminal device, comprising the flexible display and at least two support assemblies according to any one of claims 1 to 11, wherein first end faces of at least two support assemblies in the plurality of support assemblies are disposed opposite to each other.

13. The foldable terminal device according to claim 12, wherein in the two support assemblies whose first end faces are disposed opposite to each other, a groove on one support assembly (30) is staggered from a groove on the other support assembly (30).

14. The foldable terminal device according to claim 12 or claim 13, wherein the grooves of each of the support assemblies are positioned so as to be staggered without correspondence with each other.

15. The foldable terminal device according to any one of claims 12 to 14, wherein the foldable terminal device further comprises a folding assembly, the support assembly (30) is located between the folding assembly and the flexible display, the first side surface or the second side surface faces the flexible display, the flexible display has a third non-bendable area and a fourth non-bendable area that are opposite to each other, and a third bendable area that is located between the third non-bendable area and the fourth non-bendable area, a projection of the first bendable area of the support assembly (30) is in the third bendable area on the flexible display, and a projection of the first non-bendable area of the support assembly (30) on the flexible display is in the third non-bendable area or the fourth non-bendable area.

## Patentansprüche

1. Eine Stützbaugruppe (30) für ein flexibles Display, umfassend:
ein Stützelement (31), wobei das Stützelement (31) eine erste Seitenfläche und eine zweite Seitenfläche aufweist, die einander gegenüberliegen, und eine erste Endfläche (314), die zwischen der ersten Seitenfläche und der zweiten Seitenfläche verbunden ist, wobei die erste Seitenfläche mindestens einen ersten biegbaren Bereich umfasst, der erste biegbare Bereich mit der ersten Endfläche (314) verbunden ist, und eine Nut auf der ersten Endfläche (314) angeordnet ist;
**dadurch gekennzeichnet, dass** ein Verhältnis der Größe der Nut in einer ersten Richtung zur Größe des ersten biegbaren Bereichs in der ersten Richtung im Bereich von 0,35-0,65 liegt, und die erste Richtung ist eine Tiefenrichtung der Nut.

2. Die Stützbaugruppe (30) nach Anspruch 1, wobei das Stützelement (31) ferner eine zweite Endfläche (314) umfasst, die der ersten Endfläche (314) gegenüberliegt, wobei die zweite Endfläche (314) eine befestigte Endfläche (314) ist und die erste Endfläche (314) eine freie Endfläche (314) ist.

3. Die Stützbaugruppe (30) nach Anspruch 1 oder 2, wobei an beiden Enden der ersten Endfläche eine Kerbe angeordnet ist.

4. Die Stützbaugruppe (30) nach einem der Ansprüche 1 bis 3, wobei das Verhältnis der Größe der Nut in der ersten Richtung zur Größe des faltbaren Bereichs in der ersten Richtung 0,5 beträgt.

5. Die Stützbaugruppe (30) nach einem der Ansprüche 1 bis 4, wobei es eine Vielzahl von Nuten gibt.

6. Die Stützbaugruppe (30) nach einem der Ansprüche 1 bis 5, wobei die Stützbaugruppe (30) ferner eine Klebestruktur umfasst, wobei die Klebestruktur eine erste Rückklebstruktur (36) umfasst, die auf der ersten Seitenfläche und/oder eine zweite Rückklebstruktur (36) umfasst, die auf der zweiten Seitenfläche angeordnet ist.

7. Die Stützbaugruppe (30) nach Anspruch 6, wobei die Klebestruktur ferner eine Klebstoffausgabestruktur (33) umfasst, und mindestens ein Teil der Klebstoffausgabestruktur (33) auf der ersten Seitenfläche und/oder der zweiten Seitenfläche angeordnet ist.

8. Die Stützbaugruppe (30) nach Anspruch 7, wobei die Stützbaugruppe (30) ferner umfasst:
eine erste Dichtung, wobei die erste Dichtung sich auf der ersten Seitenfläche befindet; und/oder
eine zweite Dichtung, wobei die zweite Dichtung sich auf der zweiten Seitenfläche befindet.

9. Die Stützbaugruppe (30) nach einem der Ansprüche 6 bis 8, wobei die erste Seitenfläche ferner einen ersten nicht biegbaren Bereich umfasst, der an den ersten biegbaren Bereich angrenzt, und eine Projektion der ersten Rückklebstruktur (36) sich im ersten nicht biegbaren Bereich auf der ersten Seitenfläche befindet.

10. Die Stützbaugruppe (30) gemäß einem der Ansprüche 6 bis 9, wobei die zweite Seitenfläche einen zweiten faltbaren Bereich und einen zweiten nicht biegsamen Bereich umfasst, die aneinander angrenzen, ein Teil einer Projektion der zweiten rückseitigen Klebestruktur (36) sich im zweiten nicht biegsamen Bereich auf der zweiten Seitenfläche befindet und der andere Teil einer Projektion der zweiten rückseitigen Klebestruktur (36) sich im zweiten faltbaren Bereich auf der zweiten Seitenfläche befindet.

11. Die Stützbaugruppe (30) gemäß einem der Ansprüche 6 bis 9, wobei die zweite Seitenfläche einen zweiten nicht biegsamen Bereich umfasst und eine Projektion der zweiten rückseitigen Klebestruktur (36) sich im zweiten nicht biegsamen Bereich auf der zweiten Seitenfläche befindet.

12. Ein faltbares Endgerät, umfassend das flexible Display und mindestens zwei Stützbaugruppen gemäß einem der Ansprüche 1 bis 11, wobei erste Endflächen von mindestens zwei Stützbaugruppen in der Vielzahl von Stützbaugruppen einander gegenüberliegen.

13. Das faltbare Endgerät gemäß Anspruch 12, wobei in den zwei Stützbaugruppen, deren erste Endflächen einander gegenüberliegen, eine Nut auf einer Stützbaugruppe (30) versetzt zu einer Nut auf der anderen Stützbaugruppe (30) ist.

14. Das faltbare Endgerät gemäß Anspruch 12 oder Anspruch 13, wobei die Nuten jeder der Stützbaugruppen so positioniert sind, dass sie versetzt und nicht übereinstimmend zueinander sind.

15. Das faltbare Endgerät gemäß einem der Ansprüche 12 bis 14, wobei das faltbare Endgerät ferner eine Faltbaugruppe umfasst, die Stützbaugruppe (30) sich zwischen der Faltbaugruppe und dem flexiblen Display befindet, die erste Seitenfläche oder die zweite Seitenfläche dem flexiblen Display zugewandt ist, das flexible Display einen dritten nicht biegsamen Bereich und einen vierten nicht biegsamen Bereich umfasst, die einander gegenüberliegen, und einen dritten biegsamen Bereich, der sich zwischen dem dritten nicht biegsamen Bereich und dem vierten nicht biegsamen Bereich befindet, eine Projektion des ersten biegsamen Bereichs der Stützbaugruppe (30) sich im dritten biegsamen Bereich auf dem flexiblen Display befindet und eine Projektion des ersten nicht biegsamen Bereichs der Stützbaugruppe (30) auf dem flexiblen Display sich im dritten nicht biegsamen Bereich oder im vierten nicht biegsamen Bereich befindet.

## Revendications

1. Un ensemble de support (30) pour un écran flexible, comprenant :
un élément de support (31), où l'élément de support (31) possède une première surface latérale et une seconde surface latérale opposées l'une à l'autre, et une première face d'extrémité (314) connectée entre la première surface latérale et la seconde surface latérale, la première surface latérale comprend au moins une première zone pliable, la première zone pliable est connectée à la première face d'extrémité (314), et une rainure est disposée sur la première face d'extrémité (314) ;
**caractérisé en ce qu'**un rapport entre la taille de la rainure dans une première direction et la taille de la première zone pliable dans la première direction est dans la plage de 0,35 à 0,65, et la première direction est une direction de profondeur de la rainure.

2. L'ensemble de support (30) selon la revendication 1, où l'élément de support (31) comprend en outre une seconde face d'extrémité (314) opposée à la première face d'extrémité (314), la seconde face d'extrémité (314) est une face d'extrémité fixée (314), et la première face d'extrémité (314) est une face d'extrémité libre (314).

3. L'ensemble de support (30) selon la revendication 1 ou 2, où une encoche est disposée sur les deux extrémités de la première face d'extrémité.

4. L'ensemble de support (30) selon l'une quelconque des revendications 1 à 3, où le rapport entre la taille de la rainure dans la première direction et la taille de la zone pliable dans la première direction est de 0,5.

5. L'ensemble de support (30) selon l'une quelconque des revendications 1 à 4, où il existe une pluralité de rainures.

6. L'ensemble de support (30) selon l'une quelconque des revendications 1 à 5, où l'ensemble de support (30) comprend en outre une structure de liaison, la structure de liaison comprend une première structure adhésive arrière (36) disposée sur la première surface latérale et/ou une seconde structure adhésive arrière (36) disposée sur la seconde surface latérale.

7. L'ensemble de support (30) selon la revendication 6, où la structure de liaison comprend en outre une structure de distribution d'adhésif (33), et au moins une partie de la structure de distribution d'adhésif (33) est disposée sur la première surface latérale et/ou la seconde surface latérale.

8. L'ensemble de support (30) selon la revendication 7, où l'ensemble de support (30) comprend en outre :
un premier joint, où le premier joint est situé sur la première surface latérale ; et/ou
un second joint, où le second joint est situé sur la seconde surface latérale.

9. L'ensemble de support (30) selon l'une quelconque des revendications 6 à 8, où la première surface latérale comprend en outre une première zone non pliable adjacente à la première zone pliable, et une projection de la première structure adhésive arrière (36) se trouve dans la première zone non pliable sur la première surface latérale.

10. L'ensemble de support (30) selon l'une quelconque des revendications 6 à 9, dans lequel la deuxième surface latérale comprend une deuxième zone pliable et une deuxième zone non pliable adjacentes l'une à l'autre, une partie de la projection de la deuxième structure adhésive arrière (36) se trouve dans la deuxième zone non pliable sur la deuxième surface latérale, et l'autre partie de la projection de la deuxième structure adhésive arrière (36) se trouve dans la deuxième zone pliable sur la deuxième surface latérale.

11. L'ensemble de support (30) selon l'une quelconque des revendications 6 à 9, dans lequel la deuxième surface latérale comprend une deuxième zone non pliable, et une projection de la deuxième structure adhésive arrière (36) se trouve dans la deuxième zone non pliable sur la deuxième surface latérale.

12. Un dispositif terminal pliable, comprenant l'écran flexible et au moins deux ensembles de support selon l'une quelconque des revendications 1 à 11, dans lequel les faces d'extrémité de premier côté d'au moins deux ensembles de support dans la pluralité d'ensembles de support sont disposées face à face.

13. Le dispositif terminal pliable selon la revendication 12, dans lequel, dans les deux ensembles de support dont les faces d'extrémité de premier côté sont disposées face à face, une rainure sur un ensemble de support (30) est décalée par rapport à une rainure sur l'autre ensemble de support (30).

14. Le dispositif terminal pliable selon la revendication 12 ou la revendication 13, dans lequel les rainures de chacun des ensembles de support sont positionnées de manière à être décalées sans correspondance entre elles.

15. Le dispositif terminal pliable selon l'une quelconque des revendications 12 à 14, dans lequel le dispositif terminal pliable comprend en outre un ensemble de pliage, l'ensemble de support (30) est situé entre l'ensemble de pliage et l'écran flexible, la première surface latérale ou la deuxième surface latérale fait face à l'écran flexible, l'écran flexible possède une troisième zone non pliable et une quatrième zone non pliable qui sont opposées l'une à l'autre, et une troisième zone pliable qui est située entre la troisième zone non pliable et la quatrième zone non pliable, une projection de la première zone pliable de l'ensemble de support (30) se trouve dans la troisième zone pliable sur l'écran flexible, et une projection de la première zone non pliable de l'ensemble de support (30) sur l'écran flexible se trouve dans la troisième zone non pliable ou la quatrième zone non pliable.
